(19) Europäisches Patentamt
European Patent Office
Office européen des brevets

(11) **EP 3 619 257 B1**

(12) **EUROPEAN PATENT SPECIFICATION**

(45) Date of publication and mention
of the grant of the patent:
**22.12.2021 Bulletin 2021/51**

(21) Application number: **18719584.7**

(22) Date of filing: **29.04.2018**

(51) Int Cl.:
*C08J 5/18* (2006.01)      *B29C 71/00* (2006.01)
*B29D 7/01* (2006.01)      *B29C 51/00* (2006.01)
*B29C 59/00* (2006.01)      *B29K 67/00* (2006.01)
*B65D 1/30* (2006.01)

(86) International application number:
**PCT/EP2018/060997**

(87) International publication number:
**WO 2018/202602 (08.11.2018 Gazette 2018/45)**

(54) **POLYESTER SHEET**

POLYESTERFOLIE

FEUILLE DE POLYESTER

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.05.2017 EP 17168880**

(43) Date of publication of application:
**11.03.2020 Bulletin 2020/11**

(73) Proprietor: **SABIC Global Technologies B.V.**
**4612 PX Bergen op Zoom (NL)**

(72) Inventors:
• **BASHEER, Zahir**
**Riyadh 11422 (SA)**
• **JOSHI, Rajiva**
**Riyadh 11422 (SA)**

(74) Representative: **Sabic Intellectual Property Group**
**Sabic Intellectual Property Department**
**P.O. Box 3008**
**6160 GA Geleen (NL)**

(56) References cited:
WO-A1-2016/081996    WO-A1-2016/200396
WO-A1-2017/001145    WO-A1-2017/204799
WO-A1-2018/065259    US-A- 5 820 953

## Description

The present invention relates to a sheet comprising polyester. Furthermore, the invention relates to an arrangement comprising such sheet. The invention also relates to a packaging comprising such arrangement.

In certain packaging applications, such as for example in packaging of dairy products, there is a desire to package multiple quantities of the dairy products together in one packaging. In such way, several individual portions of the products may be sold in a single packaging. For example, such package may comprise 4, 6 or 8 of such individual portions.

Particularly, it is preferred the individual portions are combined into one packaging in such way that the segments of the packaging are connected, and may be separated by the consumer on his desire to retrieve a single portion from the packaging. The segments are also referred to as cups or pots. A particularly desirable way by means of which this is done is by providing a sheet of a thermoplastic material, in which cavities are introduced by for example thermoforming. During the packaging process, these cavities are filled with the product, and covered with for example an adhesive sheet to close the segments comprising the individual cavities. The cover may be a lid.

In order for the consumer to be able to retrieve an individual portion from the package, the segments comprising the portions need to be easily separable. To achieve this, the area where the segments are to be separated may for example be an area that is able to snap; that is, an area where the sheet may be broken into the individual segments along a pre-defined path. Such pre-defined path may be introduced into the sheet by the provision of one or more grooves in the sheet, allowing the consumer to break the packaging along the grooves. In particular, the segments may be separated by bending upwards, which causes snapping. Such grooves are also referred to as pre-cuts. In the context of the present invention, a segment may be understood as identifying an area of the sheet demarcated by the outer edge(s) of the sheet and one or more of the groove(s).

In order for the package to break along the grooves in a predictable way, the material in the area of the groove needs to be such that it snaps when the consumer bends the packaging along the groove. It is more preferred that snapping occurs on bending along the groove. Snapping by twisting or tearing is not desirable as the package separation becomes difficult for the consumer. However, it is also desirable that the packaging is sufficiently rigid that it does not snap along the grooves under the influence of its own weight.

The current state of art for packaging of such dairy products includes commonly the use of polystyrene polymer compositions for the preparation of snappable packages comprising multiple segments. Such polystyrene polymer compositions may for example be blends of general purpose atactic polystyrene and rubber-toughened high-impact polystyrene. Such polystyrene polymer compositions can be formed into packages with multiple segments that are snappable as desired; however, such packages are opaque, and insufficiently transparent.

WO2016200396A1 discloses snappable sheets comprising a polyester and an inorganic filler.

A further requirement is related to the transparent appearance of the packaging. It is particularly desired that the packaging is transparent in the area containing the product. Further, there is a desire for the packaging to have a glossy appearance.

One material that is particularly suitable for use in the production of such sheets is polyester. More particularly, such polyester may be a poly(ethylene terephthalate), even more particularly a poly(ethylene terephthalate) homopolymer or a poly(ethylene terephthalate) copolymer comprising at least 95 wt% of polymeric units derived from ethylene glycol and terephthalic acid or an ester thereof.

Such polyester may be provided as a transparent sheet. For example, such transparent sheet may comprise an amorphous polyester. However, such transparent polyester sheets do not provide sufficient ability to snap.

Therefore, there is a desire to provide a sheet comprising polyester that is able to be snapped along a pre-defined path, whilst still providing such rigidity to avoid undesired snapping under the influence of the weight of the package.

An embodiment of the invention by means of which this objective is achieved is a sheet comprising polyester, the sheet comprising at least one area (a) wherein the area (a) comprises at least one groove having a depth of >50 % with regard to the thickness of the sheet in the area (a), wherein the sheet has a thickness of 200 - 1000 $\mu$m in the area (a).

The sheet has a first surface and a second surface. The first surface is to be understood to be the surface that will form the upper side of the packaging, and the second surface is to be understood to be the surface that will form the lower side of the packaging.

It is preferred that the sheet comprises at least one groove having a depth of >50 % with regard to the thickness of the sheet wherein the groove is present in the first surface of the sheet. In certain embodiments, the sheet may comprise one or more further groove(s) in the second surface in the area opposite the groove in the first surface, wherein the groove(s) in the second surface are positioned in parallel with the groove in the first surface. The depth of the groove(s) in the second surface may for example be 5-25 % with regard to the thickness of the sheet in the area (a).

The polyester preferably is poly(ethylene terephthalate). Preferably, the polyester is amorphous poly(ethylene terephthalate). Use of such polyester allows for preparation of packages that do not snap under influence of their own weight when lifted on one side of the package, whilst still being snappable manually when the consumer bends the package along the groove to separate the individual portions.

Preferably the depth of the groove is >60% or >70% with regard to the thickness of the sheet in area (a). Preferably the sheet has a thickness of 500-1000 μm in the area (a), more preferably 700-1000 μm or even 700-850 μm. Preferably the depth of the groove is >60% with regard to the thickness of the sheet in area (a) and the sheet has a thickness of 700-1000 μm. Such sheet allows for the production of packages comprising multiple segments comprising each one or more thermoformed cavities for containing a desired foodstuff. For example, each cavity may have a volume of 75-125 ml. Such cavity is suitable for comprising 50-150 g of a desired foodstuff.

In a particular embodiment, the invention relates to a polyester sheet, wherein the polyester is amorphous poly(ethylene terephthalate), the sheet comprising at least one area (a) wherein the area (a) comprises at least one groove having a depth of > 60% with regard to the thickness of the sheet in area (a), wherein the groove(s) divides the sheet in multiple segments, wherein the sheet has a thickness in area (a) of 700-1000 μm. A further particular embodiment relates to a polyester sheet, wherein the polyester is amorphous poly(ethylene terephthalate), the sheet comprising at least one area (a) wherein the area (a) comprises at least one groove having a depth of > 70% with regard to the thickness of the sheet in area (a), wherein the groove(s) divides the sheet in multiple segments, wherein the sheet has a thickness in area (a) of 700-1000 μm. In yet another embodiment, the invention relates to a polyester sheet, wherein the polyester is amorphous poly(ethylene terephthalate), the sheet comprising at least one area (a) wherein the area (a) comprises at least one groove having a depth of > 70% with regard to the thickness of the sheet in area (a), wherein the groove(s) divides the sheet in multiple segments, wherein the sheet has a thickness in area (a) of 700-850 μm.

Such sheet allows for easy manual snapping of the sheet in segments, without the sheet snapping under influence of the weight in cavities formed by thermoforming of the sheet. In performing the manual snapping action, the sheet will become brittle in the area of the groove and snap along the groove. The manual snapping action to separate one or more segments is done by snapping towards the direction of the first surface of the packaging, such that the groove in the first surface is closed. The force of the weight in the cavities is directed towards the second surface of the packaging, and results in the groove in the first surface to widen. In the embodiments of the present invention, snapping does occur when a manual force in the direction of the first surface is applied to the packaging in the area of the groove, but does not occur as a result of the force of the weight exerted onto the groove.

In another embodiment, the invention relates to a polyester sheet, wherein the polyester is amorphous poly(ethylene terephthalate), the sheet comprising at least one area (a) wherein the area (a) comprises at least one groove having a depth of > 70% with regard to the thickness of the sheet in area (a), wherein the groove(s) divides the sheet in multiple segments, wherein the sheet has a thickness in area (a) of 700-1000 μm, wherein each of the one or more groove(s) have a length of 40-55 mm. Such sheet is particularly suitable for production of packages comprising thermoformed cavities in each of the segments, wherein each of the cavities comprises 50-150 g of foodstuffs, as is a common quantity of foodstuff for a single consumable portion, wherein the segments can be easily snapped manually, but wherein the package does not snap as a result of its own weight. For example, such packages can be arrangements of 4 segments, such as 2 rows of 2 segments or 1 row of 4 segments, arrangements of 6 segments, such as 2 rows of 3 segments, or arrangements of 8 segments, such as 2 rows of 4 segments.

The depth may be understood to be determined as the distance between the top surface on the sheet on the side comprising the groove and the deepest part of the groove.

The sheet according to the invention provides the ability to snap along the grooves in a predictable manner, whilst providing sufficient rigidity to avoid undesired snapping under the influence of its own weight. In particular, the sheet provides the ability to snap along the grooves in a predictable manner whilst providing sufficient rigidity to avoid snapping under the influence of its own weight where the sheet is used in a packaging comprising up to 8 individual segments, each segment containing up to 150 g of product. More particularly, the sheet provides the ability to snap along the grooves in a predictable manner, such as along a linear line, whilst providing sufficient rigidity to avoid snapping under the influence of its own weight where the sheet is used in a packaging comprising up to 8 individual segments, each segment containing up to 150 g of product.

An indicator for the presence of sufficient rigidity may for example be determined as the degree of bending or snapping of a sheet when subjected to a certain weight positioned at one end where the sheet is clamped on the other end.

The groove(s) may have a depth of 35-45 % with regard to the thickness of the sheet in the area (a).

It is also particularly desirable that the polyester in area (a) has a degree of crystallinity of ≥ 10% and ≤50%. More particularly, the polyester in area (a) has a degree of crystallinity of 15-30%. The degree of crystallinity may for example be determined based on the density according to the formula:

$$X_c = \frac{\rho_c}{\rho_s} \cdot \frac{(\rho_s - \rho_a)}{(\rho_c - \rho_a)} \cdot 100\%$$

Wherein:

- $X_c$ is the degree of crystallinity in %;
- $\rho_c$ is the density of the polyester in 100% crystalline form
- $\rho_s$ is the density of the sample in the location where the degree of crystallinity is to be determined; and
- $\rho_a$ is the density of the polyester in fully amorphous form, i.e. 0% crystallinity.

For poly(ethylene terephthalate) homopolymers, the value for $\rho_c$ is 1.455 g/cm$^3$ and for $\rho_a$ is 1.333 g/cm$^3$. The density of the sample may for example be determined in accordance with ISO 1183-1 (2004).

The area (a) may be in the form of one or more strip(s). The strip(s) may be extending from one side of the sheet to another side of the sheet, thus dividing the sheet into segments divided by the strip(s). The strip(s) may be straight line or curved. The sheet may comprise a plurality of strips arranged such as to provide the sheet in a number of segments. The sheet may comprise a plurality of strips some of which are positioned perpendicular to each other, for example such as to form a grid.

It is preferred that the groove(s) are positioned in the same direction of and centrally in the strip(s). Preferably, the groove(s) are positioned to allow dividing the sheet into segments. Particularly preferably, the groove(s) are positioned to allow breaking the sheet along the groove(s).

The sheet according to the present invention may be subjected to thermoforming to form a cavities in the sheet that are suitable to be filled with for example dairy products. Preferably, a plurality of cavities are formed during the thermoforming step. The thermoforming of the sheet preferably takes place in the area that has a degree of crystallinity of ≤ 5%. Preferably, the thermoforming takes place by thermoforming of one or more area(s) (b). Preferably, each segment comprises an area (b) where the polyester has a degree of crystallinity of ≤ 5 %. Each segment may individually be selected to be subjected to thermoforming.

The sheet may for example be prepared by subjecting a polyester sheet having a degree of crystallinity of ≤ 5% to a treatment for increasing the crystallinity selectively to a degree of crystallinity of ≥ 10% in selected areas of the sheet.

The sheet may be subjected to thermoforming prior to the treatment for increasing the crystallinity selectively. Alternatively, the sheet may be subjected to thermoforming after the treatment for increasing the crystallinity selectively.

In the case where the polyester is a poly(ethylene terephthalate), the thermoforming is preferably performed at a temperature above 78°C. Such temperature is required to ensure the polyester is able to deform as a result of softening of the material. The temperature of thermoforming of poly(ethylene terephthalate) is preferably ≤ 100°C. Thermoforming at such temperatures prevents crystallisation to occur, particularly in area (b).

The treatment for increasing the degree of crystallinity selectively may for example be a thermal treatment or a treatment involving exposure to laser irradiation. Preferably, it is a local thermal treatment. For example, the treatment for increasing the degree of crystallinity selectively may for example be a thermal treatment performed at a temperature of 125-240°C, preferably 140-200°C, more preferably 140-180°C, even more preferably 160-180°C. It is preferred that the temperature of the thermal treatment for increasing the crystallinity selectively is above the glass transition temperature of the polyester.

The treatment for increasing the degree of crystallinity selectively may be performed prior to the introduction of the groove(s) into the sheet. Alternatively, the treatment for increasing the degree of crystallinity selectively may be performed after the introduction of the groove(s) into the sheet.

The sheet, in the case where the polyester is a poly(ethylene terephthalate) may for example be subjected to the thermal treatment for a period of 40-100 s when the treatment temperature is 125-155°C; alternatively, the sheet, in the case where the polyester is a poly(ethylene terephthalate) may for example be subjected to the thermal treatment for a period of 25-50 s when the treatment temperature is 156-175°C; alternatively, the sheet, in the case where the polyester is a poly(ethylene terephthalate) may for example be subjected to the thermal treatment for a period of 15-50 s when the treatment temperature is >175°C.

The thermal treatment may for example be performed by contact heating or non-contact heating. For example, the thermal treatment may be performed using laser irradiation.

It is preferred that the sheet is produced by subjecting a sheet comprising a polyester having a degree of crystallinity of ≤ 5% to a treatment for increasing the degree of crystallinity selectively to ≥ 10%.

The polyester according to the present invention may be a crystallisable polyester derived from at least one alcohol-based compound and at least one carboxylic acid-based compound.

The carboxylic acid-based compound may for example be a carboxylic acid or and ester-forming derivative thereof, such as an ester, especially an alky- or hydroalkyl-ester, or acid chloride. Preferably, the carboxylic acid-based compound is a dicarboxylic acid or the formula HOOC-R-COOH, wherein R is a linear group or a branched group, and wherein R is an alkylene group, an arylene group, an alkenylene group, or a combination thereof. Preferably, R comprises 2-30, more preferably 4-15 carbon atoms. Suitable examples of carboxylic acid-based compounds may include saturated aliphatic dicarboxylic acids such as oxalic acid, malonic acid, succinic acid, glutaric acid, adipic acid, pimelic acid, suberic acid, azelaic acid, sebacic acid, decanedicarboxylic acid, dodecanedicarboxylic acid, tetradecanedicarboxylic acid, hexadecanedicarboxylic acid, 3-cyclobutanedicarboxylic acid, 1,3-cyclopentanedicarboxylic acid, 1,2-cyclohexanedicarboxylic acid, 1,3-cyclohexanedicarboxylic acid, 1,4-cyclohexanedicarboxylic acid, 2,5-norbonanedicarboxylic acid, and dimeric acid; unsaturated aliphatic dicarboxylic acids such as fumaric acid, maleic acid and itaconic acid; and aromatic dicarboxylic acid such as orthophthalic acid, isophthalic acid, terephthalic acid, 5-(alkali metal)sulfoisophthalic acid, diphenic acid, 1,3-naphthalenedicarboxylic acid, 1,4-naphthalenedicarboxylic acid, 1,5-napthalenedicarboxylic acid, 2,6-naphthalenedicarboxylic acid, 2,7-naphthalenedicarboxylic acid, 4,4'-biphenyldicarboxylic acid, 4,4'-biphenylsulfonedicarboxylic acid, 4,4'-biphenyl ether dicarboxylic acid, 1,2-bis(phenoxy)ethane-p,p'-dicarboxylic acid, pamoic acid, and anthracenedicarboxylic acid. Other dicarboxylic acids and minor amounts of polycarboxylic acids may also be used as constituent components.

More preferable, the carboxylic acid-based compound is at least one compound selected from the group comprising terephthalic acid, isophthalic acid, succinic acid, adipic acid, glutaric acid, oxalic acid, and maleic acid. Most preferably, the carboxylic acid-based compound is terephthalic acid.

The alcohol-based compound may be a hydroxyl-functional compound. Preferably, the alcohol-based compound is a bifunctional alcohol, such as an alkylene glycol of the formula HO-R'-OH, a polyalkylene glycol having the formula HO-[R"-O]$_n$-H or combinations thereof, wherein R' is an alkylene group, linear or branched, comprising 2 to 10, preferably 2 to 4 carbon atoms, and wherein R", being the same or different, is an alkylene group comprising 1 to 10, preferably 1 to 5 carbon atoms.

Suitable examples of such alcohol-based compound include aliphatic glycols such as ethylene glycol, 1,2-propylene glycol, 1,3-propylene glycol, diethylene glycol, triethylene glycol, 1,2-butylene glycol, 1,3-butylene glycol, 2,3-butylene glycol, 1,4-butylene glycol, 1,5-pentanediol, neopentyl glycol, 1,6-hexanediol, 1,2-cyclohexanediol, 1,3-cyclohexanediol, 1,4-cyclohexanediol, 1,2-cyclohexanedimethanol, 1,3-cyclohexanedimethanol, 1,4-cyclohexanedimethanol, 1,4-cyclohexanediethanol, 1,10-decamethylene glycol, 1,12-dodecanediol, polyethylene glycol, polytrimethylene glycol, and polytetramethylene glycol; and aromatic glycols such as hydroquinone, 4,4'-dihydroxybisphenol, 1,4-bis(p-hydroxyethoxy)benzene, 1,4-bis(hydroxyethoxyphenyl)sulfone, bis(p-hydroxyphenyl)methane, 1,2-bis(p-hydroxyphenyl)ethane, bisphenol A, bisphenol C, 2,5-naphthalenediol, and glycols obtained by adding ethylene oxide to the glycols. Preferably, the alcohol-based compound is at least one compound selected from the group consisting of ethylene glycol, 1,3-propylene glycol, 1,4-butylene glycol, and 1,4-cyclohexanedimethanol. More preferably, the alcohol-based compound is ethylene glycol.

It is particularly preferred that the polyester is derived from ethylene glycol and terephthalic acid. The polyester may for example be a poly(ethylene terephthalate).

The polyester may comprise up to 20.0 wt% of moieties derived from a comonomer. Preferably, the polyester comprises up to 10.0 wt% of moieties derived from a comonomer. More preferably, the polyester comprises up to 5.0 wt% of moieties derived from a comonomer, such as 1.0-5.0 wt%. Such comonomer may for example be one or more selected from isophthalic acid, 1,4-cyclohexanedimethanol, pentaerythritol, pyromellitic anhydride, or combinations thereof. Preferably, the comonomer is isophthalic acid. For example, the polyester may comprise 1.0-5.0 wt% of moieties derived from isophthalic acid. For example, the polyester may be derived from ethylene glycol and terephthalic acid, and may comprise 1.0-5.0 wt% of moieties derived from isophthalic acid, with regard to the total weight of the polyester.

A suitable polyester preferably has a molar mass that results in a melt viscosity that allows easy and stable extrusion, and which results in a desired level of mechanical properties of the products. A typical indication of the molar mass is provided by the intrinsic viscosity of the polyester. The intrinsic viscosity may for example be determined in accordance with ASTM D2857-95 (2007). Suitable polyesters to be used in the production of the sheet according to the present invention have an intrinsic viscosity of 0.50 - 2.50 dl/g. A lower intrinsic viscosity allows for quick selective crystallisation; however if the intrinsic viscosity is too low, the sheet may sag during the heating before the thermoforming. It is preferred that the polyester has an intrinsic viscosity of 0.6 - 1.5 dl/g, more preferably 0.7 - 1.0 dl/g.

In a preferred embodiment, where the sheet comprises multiple grooves, and where these grooves intersect, the sheet comprises an aperture in the area of each intersection. Such aperture may for example be a diamond-shaped or rhombus-shaped aperture. Such apertures allow detaching of a single segment by snapping on bending.

The present invention, in one of its embodiments, also relates to an arrangement comprising a sheet according to the invention comprising multiple cavities for containing foodstuff formed by thermoforming.

The invention further also relates to the use of such arrangement for production of a foodstuff packaging comprising multiple cavities that can be separated by breaking along the groove(s). The invention also relates to a packaging comprising such arrangement. Such packaging may for example be used to pack dairy products such as yoghurts, Alternatively, such packaging may be used to pack of other foodstuffs such as coffee or tea portions. Further use of the packaging of the invention to pack other sorts of foodstuffs is also envisioned. The packaging may also be used to pack medicines in the form of tablets or pills such that individual portions may be separated from the strip. The transparency of the thermoformed cavity is such application may have a further desirable effect in that the contents of the package can be more easily identified.

A further use of the packaging of the present invention is in packing electronic components, such as batteries. In such application, the individual battery may be withheld from exposure to atmospheric conditions, which may be beneficial for the durability of the battery.

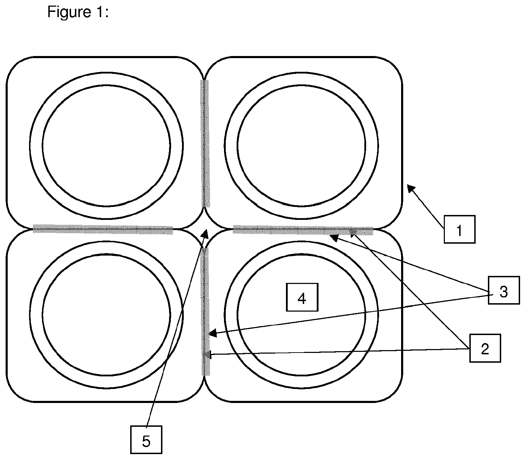

An exemplary sheet according to the present invention is presented in figure 1. In this figure:

- (1) indicates the polyester sheet;
- (2) indicates the grooves;
- (3) indicates area (a) having a degree of crystallinity of ≥ 10%;
- (4) indicates area (b) having a degree of crystallinity of ≤ 5%; and
- (5) indicates a diamond-shapes aperture.

The invention will now be illustrated by the following non-limiting examples.

Specimen preparation.

For the experimental part, polyester sheets having a thickness of 800 μm and were used. The sheets were produced using as polyester a PET homopolymer having an intrinsic viscosity of 0.84 dl/g. The sheets were produced from the PET by drying PET pellets at 170°C for 5 hrs, and extruding at 280°C using an extruder equipped with a sheet casting die to obtain a sheet of 13 cm width, 800 μm thickness and a crystallinity of ≤ 1%. The obtained sheet was cut into specimen sheets of 13 cm by 13 cm.

Introduction of grooves.

Grooves were introduced in the snapping area of certain of the specimens, i.e. in the middle of the specimen sheets, over the full length of the sheet, the grooves being introduced using a knife to a predetermined depth, determined by microscopy. Grooves were made in the upper surface of the sheets.

Determination of snapability.

Specimen sheets prepared as described above was provided with a groove with a depth of 70% of the thickness (example A) or 50% (example B). The sheets were each bent upwards (the groove being positioned in the upper surface) manually in a rapid movement. The sheet of example A demonstrated a clean snap over the entire length of the groove, whereas the sheet of example B did not snap but only bend.

Determination of resistance to load.

A specimen sheet prepared as described above was provided with a groove with a depth of 70% of the thickness of the sheet to obtain a sheet with 2 segments divided by the groove. A vertical 1x1 cm square was punched out from the centre of the sheet, resulting in a 13X13 cm sheet with two groove segments on either side of the central aperture. The sheet was positioned in a clamp with one of its sides parallel to the grooves, the grooves facing upwards. A load of 700 g was positioned onto the segment of the sheet that was not held by the clamp. The segment comprising the load did show a minor bending but did not snap.

The above examples demonstrate that the sheet according to the invention, as demonstrated under example 1, provide the desired balance of rigidity and snapability that is desired for the packaging applications such as packaging of individual portions of dairy products.

**Claims**

1. Sheet comprising polyester, the sheet comprising at least one area (a) wherein the area (a) comprises at least one groove having a depth of >50 % with regard to the thickness of the sheet in the area (a), wherein the sheet has a thickness of 200 - 1000 μm in the area (a).

2. Sheet according to claim 1, wherein the polyester is poly(ethylene terephthalate).

3. Sheet according to any one of claims 1-2, wherein the polyester has an intrinsic viscosity determined in accordance with ASTM D2857-95 (2007) of 0.6-1.5 dl/g.

4. Sheet according to any one of claims 2-3, wherein the poly(ethylene terephthalate) comprises up to 20.0 wt% of moieties derived from a comonomer wherein the comonomer is one or more selected from isophthalic acid, 1,4-cyclohexanedimethanol, pentaerythritol, pyromellitic anhydride, or combinations thereof.

5. Sheet according to any one of claims 1-4, wherein the depth of the groove is >60% or >70% with regard to the thickness of the sheet in area (a).

6. Sheet according to any one of claims 1-5, wherein the depth of the groove is >60% with regard to the thickness of the sheet in area (a) and the sheet has a thickness of 700-1000 μm.

7. Sheet according to any one of claims 1-6, wherein the polyester is amorphous poly(ethylene terephthalate),

8. Sheet according to any one of claims 1-7, comprising at least one area (a) wherein the area (a) comprises at least one groove having a depth of > 60% with regard to the thickness of the sheet in area (a), wherein the groove(s) divide the sheet in multiple segments, wherein the sheet has a thickness in area (a) of 700-1000 μm.

9. Sheet according to any one of claims 1-8 comprising at least one area (a) wherein the area (a) comprises at least one groove having a depth of > 70% with regard to the thickness of the sheet in area (a), wherein the groove(s) divide the sheet in multiple segments, wherein the sheet has a thickness in area (a) of 700-1000 μm, wherein each of the one or more groove(s) have a length of 40-55 mm.

10. Sheet according to any one of claims 1-9, wherein the sheet has a thickness of 700-850 μm.

11. Package comprising a sheet according to any one of claims 9-10, wherein each segment comprises a cavity formed by thermoforming.

12. Package according to claim 11, wherein the volume of each of the cavities is 75-125 ml.

13. Package according to any one of claims 11-12, wherein the package comprises an arrangement of 4, 6 or 8 segments each comprising a cavity.

14. Package according to claim 13 wherein the arrangement is formed by 2 rows of 2 segments, 1 row of 4 segments, 2 rows of 3 segments, or 2 rows of 4 segments.

**Patentansprüche**

1. Folie, die Polyester umfasst, wobei die Folie mindestens einen Bereich (a) umfasst, wobei der Bereich (a) mindestens eine Rille mit einer Tiefe von > 50 % in Bezug auf die Dicke der Folie im Bereich (a) aufweist, wobei die Folie eine Dicke von 200 bis 1000 μm im Bereich (a) aufweist.

2. Folie nach Anspruch 1, wobei der Polyester Poly(ethylenterephthalat) ist.

3. Folie nach einem der Ansprüche 1 bis 2, wobei der Polyester eine nach ASTM D2857-95 (2007) bestimmte intrinsische Viskosität von 0,6 bis 1,5 dl/g aufweist.

4. Folie nach einem der Ansprüche 2 bis 3, wobei das Poly(ethylenterephthalat) bis zu 20,0 Gew.-% von einem Comonomer abgeleitete Reste umfasst, wobei das Comonomer eines oder mehrere ausgewählt aus Isophthalsäure, 1,4-Cyclohexandimethanol, Pentaerythrit, Pyromellitsäureanhydrid oder Kombinationen davon ist.

5. Folie nach einem der Ansprüche 1 bis 4, wobei die Tiefe der Rille > 60 % oder > 70 % in Bezug auf die Dicke der Folie im Bereich (a) beträgt.

6. Folie nach einem der Ansprüche 1 bis 5, wobei die Tiefe der Rille > 60 % in Bezug auf die Dicke der Folie im Bereich (a) beträgt und die Folie eine Dicke von 700 bis 1000 μm aufweist.

7. Folie nach einem der Ansprüche 1 bis 6, wobei der Polyester amorphes Poly(ethylenterephthalat) ist.

8. Folie nach einem der Ansprüche 1 bis 7, die mindestens einen Bereich (a) umfasst, wobei der Bereich (a) mindestens eine Rille mit einer Tiefe von > 60 % in Bezug auf die Dicke der Folie im Bereich (a) aufweist, wobei die Rille(n) die Folie in mehrere Segmente unterteilt bzw. unterteilen, wobei die Folie im Bereich (a) eine Dicke von 700 bis 1000 μm aufweist.

9. Folie nach einem der Ansprüche 1 bis 8, die mindestens einen Bereich (a) umfasst, wobei der Bereich (a) mindestens eine Rille mit einer Tiefe von > 70% in Bezug auf die Dicke der Folie im Bereich (a) aufweist, wobei die Rille(n) die Folie in mehrere Segmente unterteilt bzw. unterteilen, wobei die Folie im Bereich (a) eine Dicke von 700 bis 1000 μm aufweist, wobei jede der einen oder mehreren Rille (n) eine Länge von 40 bis 55 mm aufweist.

10. Folie nach einem der Ansprüche 1 bis 9, wobei die Folie eine Dicke von 700 bis 850 μm aufweist.

11. Verpackung, die eine Folie nach einem der Ansprüche 9 bis 10 umfasst, wobei jedes Segment einen durch Thermoformung gebildeten Hohlraum umfasst.

12. Verpackung nach Anspruch 11, wobei das Volumen jedes der Hohlräume 75 bis 125 ml beträgt.

13. Verpackung nach einem der Ansprüche 11 bis 12, wobei die Verpackung eine Anordnung von 4, 6 oder 8 Segmenten umfasst, die jeweils einen Hohlraum aufweisen.

14. Verpackung nach Anspruch 13, wobei die Anordnung durch 2 Reihen von 2 Segmenten, 1 Reihe von 4 Segmenten, 2 Reihen von 3 Segmenten oder 2 Reihen von 4 Segmenten gebildet wird.

**Revendications**

1. Feuille comprenant du polyester, la feuille comprenant au moins une zone (a) dans laquelle la zone (a) comprend au moins une rainure ayant une profondeur de > 50 % vis-à-vis de l'épaisseur de la feuille dans la zone (a), dans laquelle la feuille a une épaisseur de 200 à 1000 μm dans la zone (a).

2. Feuille selon la revendication 1, dans laquelle le polyester est le poly(téréphtalate d'éthylène).

3. Feuille selon l'une quelconque des revendications 1 à 2, dans laquelle le polyester a une viscosité intrinsèque déterminée en conformité avec ASTM D2857-95 (2007) de 0,6 à 1,5 dl/g.

4. Feuille selon l'une quelconque des revendications 2 à 3, dans laquelle le poly(téréphtalate d'éthylène) comprend jusqu'à 20,0 % en poids de fractions dérivées d'un comonomère dans laquelle le comonomère est au moins l'un choisi parmi l'acide isophtalique, le 1,4-cyclohexanediméthanol, le pentaérythritol, un anhydride pyromellitique, ou leurs combinaisons.

5. Feuille selon l'une quelconque des revendications 1 à 4, dans laquelle la profondeur de la rainure est > 60 % ou > 70 % vis-à-vis de l'épaisseur de la feuille dans la zone (a) .

6. Feuille selon l'une quelconque des revendications 1 à 5, dans laquelle la profondeur de la rainure est > 60 % vis-à-vis de l'épaisseur de la feuille dans la zone (a) et la feuille a une épaisseur de 700 à 1000 $\mu$m.

7. Feuille selon l'une quelconque des revendications 1 à 6, dans laquelle le polyester est le poly(téréphtalate d'éthylène) amorphe.

8. Feuille selon l'une quelconque des revendications 1 à 7, comprenant au moins une zone (a) dans laquelle la zone (a) comprend au moins une rainure ayant une profondeur de > 60 % vis-à-vis de l'épaisseur de la feuille dans la zone (a), dans laquelle la(les) rainure(s) divise(nt) la feuille en multiples segments, dans laquelle la feuille a une épaisseur dans la zone (a) de 700 à 1000 $\mu$m.

9. Feuille selon l'une quelconque des revendications 1 à 8, comprenant au moins une zone (a) dans laquelle la zone (a) comprend au moins une rainure ayant une profondeur de > 70 % vis-à-vis de l'épaisseur de la feuille dans la zone (a), dans laquelle la(les) rainure(s) divise(nt) la feuille en multiples segments, dans laquelle la feuille a une épaisseur dans la zone (a) de 700 à 1000 $\mu$m, dans laquelle chacune des une ou plusieurs rainure(s) a une longueur de 40 à 55 mm.

10. Feuille selon l'une quelconque des revendications 1 à 9, dans laquelle la feuille a une épaisseur de 700 à 850 $\mu$m.

11. Emballage comprenant une feuille selon l'une quelconque des revendications 9 à 10, dans lequel chaque segment comprend une cavité formée par thermoformage.

12. Emballage selon la revendication 11, dans lequel le volume de chacune des cavités est de 75 à 125 ml.

13. Emballage selon l'une quelconque des revendications 11 à 12, dans lequel l'emballage comprend un agencement de 4, 6 ou 8 segments comprenant chacun une cavité.

14. Emballage selon la revendication 13 dans lequel l'agencement est formé par 2 rangées de 2 segments, 1 rangée de 4 segments, 2 rangées de 3 segments, ou 2 rangées de 4 segments.

Figure 1:

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016200396 A1